(19) Europäisches Patentamt
European Patent Office
Office européen des brevets

(11) **EP 4 062 152 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **20824086.1**

(22) Anmeldetag: **19.11.2020**

(51) Internationale Patentklassifikation (IPC):
**G01N 21/45** (2006.01) **G02B 27/54** (2006.01)
**G02B 27/48** (2006.01) **B08B 15/02** (2006.01)
**B01J 4/00** (2006.01) G01N 21/15 (2006.01)
B01L 1/04 (2006.01) F24F 3/163 (2021.01)

(52) Gemeinsame Patentklassifikation (CPC):
**G01N 21/455; B01J 4/002; B08B 15/023;**
**G02B 27/48; G02B 27/54;** B01J 2204/002;
B01J 2219/00164; B01J 2219/00198;
B01J 2219/002; B01L 1/04; B08B 2215/003;
F24F 3/163; G01N 2021/151

(86) Internationale Anmeldenummer:
**PCT/EP2020/082737**

(87) Internationale Veröffentlichungsnummer:
**WO 2021/099494 (27.05.2021 Gazette 2021/21)**

(54) **VERFAHREN ZUM DETEKTIEREN VON PRIMÄRGASSTRÖMUNGEN IN STRÖMUNGSRÄUMEN**

METHOD FOR DETECTING PRIMARY GAS FLOWS IN FLOW CHAMBERS

PROCÉDÉ DE DÉTECTION DE FLUX DE GAZ PRIMAIRE DANS DES ESPACES DE FLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2019 DE 102019131328**

(43) Veröffentlichungstag der Anmeldung:
**28.09.2022 Patentblatt 2022/39**

(73) Patentinhaber: **LaVision GmbH**
**37081 Göttingen (DE)**

(72) Erfinder: **BERG, Thomas**
**37081 Göttingen (DE)**

(74) Vertreter: **Schneider, Peter Christian**
**Fiedler, Ostermann & Schneider**
**Patentanwälte**
**Obere Karspüle 41**
**37073 Göttingen (DE)**

(56) Entgegenhaltungen:
DE-A1- 19 942 856     DE-A1-102010 030 143
DE-A1-102019 009 213

- **KOTCHOURKO N ET AL: "Concentration measurements in a round hydrogen jet using Background Oriented Schlieren (BOS) technique", INTERNATIONAL JOURNAL OF HYDROGEN ENERGY, ELSEVIER SCIENCE PUBLISHERS B.V., BARKING, GB, Bd. 39, Nr. 11, 2. Dezember 2013 (2013-12-02), Seiten 6201-6209, XP028832487, ISSN: 0360-3199, DOI: 10.1016/J.IJHYDENE.2013.10.152**
- **KATSUYOSHI TANIMIZU ET AL: "Drag force on quasi-axisymmetric scramjets at various flight Mach numbers: theory and experiment", SHOCK WAVES ; AN INTERNATIONAL JOURNAL ON SHOCK WAVES, DETONATIONS AND EXPLOSIONS - PUBLISHED UNDER THE AUSPICES OF THE INTERNATIONAL SHOCK WAVE INSTIUTE, SPRINGER, BERLIN, DE, Bd. 19, Nr. 2, 13. März 2009 (2009-03-13), Seiten 83-93, XP019701276, ISSN: 1432-2153**
- **MICHALSKI QUENTIN ET AL: "An application of speckle-based background oriented schlieren for optical calorimetry", EXPERIMENTAL THERMAL AND FLUID SCIENCE, Bd. 91, 9. September 2017 (2017-09-09), Seiten 470-478, XP085320183, ISSN: 0894-1777, DOI: 10.1016/J.EXPTHERMFLUSCI.2017.09.012**

**Beschreibung**

Gebiet der Erfindung

Die Erfindung bezieht sich auf ein Verfahren zum Detektieren von insbesondere langsamen Primärgasströmungen, d.h. von Primärgasströmungen mit insbesondere einer Strömungsgeschwindigkeit von 0,1 bis 1 m/s, bevorzugt von 0,3 bis 0,5 m/s, in Strömungsräumen, wobei das in einem Strömungsraum strömende Primärgas lokal mit einem Impfgas beimpft und dessen Bewegung repräsentativ für die Strömung des Primärgases mittels eines Bilddetektors mit vorgeschalteter Abbildungsoptik bildgebend detektiert wird,
wobei als Impfgas ein sich mit dem Primärgas mitbewegendes Gasgemisch verwendet wird, welches einen von dem Primärgas unterscheidbaren Brechungsindex aufweist, und die bildgebende Detektion mittels eines Hintergrund-Schlierenmessverfahrens erfolgt.

Stand der Technik

Ein derartiges Verfahren ist bekannt aus der DE 10 2010 030 143 A1.
Abfüllvorgänge in der pharmazeutischen Industrie, beispielsweise das Abfüllen von pharmazeutischen Flüssigkeiten in zum Verkauf bestimmte Portions-Phiolen, erfolgen typischerweise in sogenannten Flow-Boxen. Es handelt sich hierbei um Hauben mit meist transparenten Wänden, die eine auf einer Arbeitsbank angeordnete Abfüllvorrichtung umgeben und mit steril gefilterter Luft durchströmt werden, um jeglichen Außeneintrag von Unsterilitäten zu verhindern. Eine solche Luftströmung, die hier auch als Primärgasströmung bezeichnet wird, hat definierten Vorgaben zu folgen. Insbesondere handelt es sich typischerweise um langsame Strömungen mit Strömungsgeschwindigkeiten von 0,3 bis 0,5 m/s, die den Strömungsraum, d.h. hier die Flow-Box, in bevorzugt laminarer Weise von oben nach unten durchströmen und ausschließlich an vorgegebenen Austrittsöffnungen nach außen dringen. Dabei wird die Strömung allerdings von umströmten Aufbauten und in die Flow-Box eingebrachten Gegenständen gestört. Gleichwohl ist die Einhaltung der definierten Strömungsparameter ein wesentliches Qualitätskriterium für den Abfüllprozess und unterliegt einer strengen, behördlichen Kontrolle. So sieht in USA beispielsweise die dortige Gesundheitsbehörde FDA eine regelmäßige Überprüfung und Dokumentation der Strömungseigenschaften vor. Ein dafür vorgeschriebenes Verfahren bestimmt, dass die Primärgasströmung über Düsen lokal mit einem Glycol-Aerosol als Impfsubstanz beimpft wird. Einfallendes Licht wird an dem Aerosol gestreut, sodass die Aerosol-Bewegung durch die transparenten Wände der Flow-Box hindurch optisch detektiert, insbesondere mittels einer Videokamera erfasst, und aufgezeichnet werden kann. Da es sich bei dem Aerosol definitionsgemäß um Schwebeteilchen handelt, die sich mit der Primärgasströmung mitbewegen, kann die aufgezeichnete Bewegung des Aerosols als repräsentativ für die Bewegung des Primärgases angenommen werden. Nachteilig hierbei ist die erhebliche Verschmutzung der eigentlichen Abfüllvorrichtung, die sich durch deren Benetzung mit dem Glycol-Aerosol ergibt. Nach jeder Strömungs-Überprüfung ist daher eine intensive Reinigung der Abfüll-Vorrichtung erforderlich, bevor diese erneut in Betrieb genommen werden kann.
Ähnliche Szenarien sind dem Fachmann aus anderen Bereichen, wie beispielsweise der Verpackung von Lebensmitteln unter Schutzgasströmungen oder bei der Zwangsbelüftung von Räumen, beispielsweise in Server-Farmen oder auch in Wohnräumen oder den Innenräumen von Kraftfahrzeugen, her bekannt. In allen Fällen erfolgt typischerweise eine Visualisierung der jeweiligen Primärgasströmung durch Beimpfung mit einem Aerosol, was zu den oben genannten Nachteilen führt.
Aus dem Bereich der Luft- und Raumfahrttechnik, beispielsweise dokumentiert in der DE 199 42 856 B4, ist das sogenannte Hintergrund-Schlierenmessverfahren bekannt, welches häufig mit der englischen Abkürzung BOS (Background Oriented Schlieren) bezeichnet wird. Bei Strömungen hoher Geschwindigkeiten treten große Druckgradienten und daher große, lokale Massendichte-Unterschiede innerhalb der Strömung auf. Diese Massendichte-Unterschiede bedingen entsprechende Unterschiede des Brechungsindexes des strömenden Gases. Beim BOS-Verfahren wird hinter der zu visualisierenden Strömung ein gemusterter Hintergrund positioniert und vor der Strömung ein auf diesen Hintergrund gerichteter Bilddetektor. Die Abbildung des Hintergrundes auf dem Bilddetektor ist abhängig vom konkreten Weg, welchen das Licht von einem gegebenen Hintergrundpunkt zum Bilddetektor zurücklegt, wobei dieser Weg von den Ablenkungs-Eigenschaften, d.h. insbesondere vom Brechungsindex des zwischen dem Hintergrund und dem Bilddetektor passierten Mediums abhängt. Wie oben erläutert, kann der Brechungsindex der zwischen dem Hintergrund und dem Bilddetektor verlaufenden Strömung lokal unterschiedlich sein, sodass die von unterschiedlichen Hintergrundpunkten auf den Bilddetektor fallenden Strahlen auf ihrem Weg unterschiedliche Ablenkungen erfahren. Die daraus resultierenden Veränderungen des detektierten Musters können mit bekannten Korrelationsverfahren berechnet und somit Brechungsindexgradienten sichtbar gemachte werden. Zur Berechnung kann auf dem Fachmann bekannte Korrelations-Algorithmen zurückgegriffen werden. Zur Visualisierung wird jedem Pixel des Bilddetektors der Wert der am entsprechenden Ort berechneten Brechungsindex-Variation zugewiesen und farblich oder durch Graustufen codiert. Auch ist es möglich, dieses BOS-Bild einem herkömmlichen Bild des Szenarios zu überlagern. Auch Bildverarbeitungsverfahren können im Rahmen des BOS-Ansatzes zur Strömungsvisualisierung herangezogen werden. Alle beruhen jedoch auf der ortsaufgelösten Messung von strömungsbedingten Brechungsindex-Variationen, die sich in der zeitlich veränderlichen Abbildung eines gemusterten Hintergrundes durch die zu visualisierende Strömung hindurch niederschlagen. Das BOS-Verfahren eignet sich auch zur Visualisierung thermischer Strömungen, d.h. wenn die relevanten Dichteunterschiede durch Temperaturunterschiede, wie beispielsweise lokales Erhitzen der Strömung, erzeugt werden.

Die eingangs genannte, gattungsbildende Druckschrift beschreibt ein Verfahren zur schlierenoptischen Detektion einer Primärgasströmung, wobei die genannte Druckschrift insbesondere auf Geschwindigkeitsmessungen und weniger auf eine Visualisierung der Strömung abhebt. Aus der dortigen Diskussion des Standes der Technik geht hervor, dass Bereiche um ca. 0,5 Mach, d.h. ca. 170 m/s bzw. ca. 620 km/h, im Fokus der Anwendung stehen. Und in der Tat ist das vorbekannte Verfahren auch nur für vergleichsweise hohe Strömungsgeschwindigkeiten geeignet. So schlägt die genannte Druckschrift als ihren zentralen Gedanken vor, in das Primärgas eine "Dichteschwankung" i.S. eines lokalen Gebietes anderer Dichte einzubringen. Insbesondere soll zur Erzeugung der lokalen Dichteschwankung räumlich und zeitlich begrenzt eine Energie oder ein Fremdgas anderen Brechungsindexes in das Primärgas eingebracht werden. Das damit in der Regel nicht nur ein Brechungsindex-Unterschied, sondern auch auch ein Massendichte-Unterschied verbunden ist, der zu einer Relativbewegung zwischen der eingebrachten "Dichteschwankung" und der Primärgasströmung führen kann, wird in der genannten Druckschrift nicht thematisiert, weil sie bei hohen Strömungsgeschwindigkeiten in der Tat praktisch irrelevant ist.

Aus Kotchourko, N. et al.: "Concentration measurement in a round hydrogen jet using Background Oriented Schlieren (BOS) technique"; International Journal of Hydrogen Energy; Elsvier Science Publishers 8. V., Barking, G8; Bd. 39, Nr. 11 (2013-12-02), S. 6201-6209; ISSN: 0360-3199; DOI: 10.1016/J.IJHYDENE.2013.10.152 ist die Visualisierung eines schnellen Primärgasstrahls von ca. 100 m/s mittels BOS-Technik ohne zusätzliche Beimpfung bekannt.

Auch Tanimizu, K. et al.: "Drag force on quasi-axisymmetric scramjets at various flight Mach numbers: theory and experiment"; Shock Waves; Springer, Berlin, DE; Bd. 19, Nr. 2 (2009-03-13), S. 83-93; ISSN: 1432-2153 beschäftigt sich mit der Vermessung sehr schneller Gasströmungen (Mach 6-10).

Der für das BOS-Verfahren erforderliche, gemusterte Hintergrund wird typischerweise durch eine entsprechend gemusterte Fläche bereitgestellt. Das Muster kann auf die Fläche gedruckt, geklebt, projiziert oder auf andere Weise in von dem Bilddetektor detektierbarer Weise aufgebracht werden. Die oben genannte Druckschrift offenbart zusätzlich die Möglichkeit der Verwendung natürlicher Hintergründe, deren natürliche Musterung bei entsprechend hoher Auflösung des Bilddetektors und hinreichender Rechenkapazität zur Durchführung des oben skizzierten BOS-Verfahrens ausreicht.

Aus Meier, A. H.; Roesgen, Th.: "Improved background oriented schlieren imaging using laser speckle illumination" Exp. fluids (2013) 54: 1549 (DOI 10.1007/s 00348-013-1549-8) ist es bekannt, als Hintergrund für eine BOS-basierte Visualisierung einer thermischen Strömung eine von dem Bilddetektor aus gesehen hinter einer Kerzenflamme positionierte Projektionsfläche zu verwenden, die großflächig mit kohärentem Licht bestrahlt, d.h. kohärent ausgeleuchtet wird. Bei einer solchen kohärenten Ausleuchtung ergeben sich aufgrund von Interferenz-Phänomenen sogenannte Laserspeckle, die im Wesentlichen als ein Punktmuster erscheinen. Je nach der jeweiligen räumlichen Massendichte- und folglich Brechungsindex-Konstellation wird dieses Punktmuster unterschiedlich auf dem Bilddetektor abgebildet. Im Übrigen kann auf die obige Erläuterung zum klassischen BOS-Verfahren verwiesen werden.

Michalski, Q. et al.: "An application on speckle-based background oriented schlieren for optical calorimetry", Experimental Thermal and Fluid Science; Bd. 91 (2017-09-09) S. 470-478; ISSN: 0894-1777; DOI:10.1016/J.EXPTHERMFLUSCI.2017.09.012 beschreibt die die Visualisierung eines mit hoher Relativgeschwindigkeit zum Primärgas eingebrachten Impfgases deutlich verschiedener Massendichte, wobei das verwendete Hintergrundmuster ebenfalls als Speckle-Muster mittels Lasers erzeugt wird.

Aufgabenstellung

Es ist die Aufgabe der vorliegenden Erfindung, das gattungsgemäße Verfahren derart weiterzubilden, dass es für langsame Primärgasströmungen in Strömungsräumen tauglich wird.

Darlegung der Erfindung

Diese Aufgabe wird in Verbindung mit den Merkmalen des Oberbegriffs von Anspruch 1 dadurch gelöst, dass das Gasgemisch (34) derart zusammengesetzt ist, dass gilt:

$$\left| m_P - \sum_{i=1}^{N} a_i m_i \right| < 2 \text{ g/mol},$$

und

$$\left| n'_P - \sum_{i=1}^{N} a_i n'_i \right| > 70,$$

wo $m_P$ die Molmasse und $n'_P$ der Brechungsindex des Primärgases, $m_i$ die Molmasse und $n'_i$ der Brechungsindex der i-ten Gaskomponente des Impfgases, $N$ die Anzahl von Gaskomponenten des Impfgases und $a_i$ ihr jeweiliger relativer Molanteil im Impfgas ist, sodass die Mitbewegung des Gasgemischs (34) mit dem mit einer Strömungsgeschwindigkeit von 0,1 bis 1,0 m/s strömenden Primärgas (18) relativbewegungsfrei erfolgt.

Bevorzugte Ausführungsformen der Erfindung sind Gegenstand der abhängigen Ansprüche.

Als Impfsubstanz wird eine Gasmischung eingesetzt, die geeignet ist, sich relativbewegungsfrei mit dem Primärgas mitzubewegen, d.h., das Impfgas muss eine dem Primärgas ähnliche Massendichte aufweisen. "Relativbewegungsfrei" ist im vorliegenden Kontext im Sinne von "ohne massenunterschiedsbedingte Eigenbewegung" so zu verstehen, dass während der Verfahrensdurchführung, d.h. bei den jeweils vorliegenden Strömungsgeschwindigkeiten und durchströmten Strecken, keine bzw. für die angestrebte Messgenauigkeit keine maßgeblichen Abweichungen (in Richtung und Betrag) zwischen den Strömungsgeschwindigkeiten von Primärgas und Impfgas auftreten. Wie oben bereits erwähnt, liegen die typischen Strömungsgeschwindigkeiten im Bereich von 0,1 bis 1,0 m/s, bevorzugt im Bereich von 0,3 bis 0,5 m/s. Die typischerweise relevanten Strecken sind die Längendimensionen des jeweiligen Strömungsraums. Der Fachmann wird verstehen, dass die tolerierbare Abweichung zwischen der Massendichte des Impfgases und des Primärgases umso größer sein kann, je größer die zu detektierenden Strömungsgeschwindigkeiten des Primärgases und je kleiner die jeweils durchströmten Strecken sind, um noch die erfindungsrelevante Relativbewegungsfreiheit zwischen Impfgas und Primärgas zu erzielen. Impfgas, das deutlich schwerer als das Primärgas ist, würde unabhängig von der Primärgasströmung absinken, deutlich leichteres Impfgas für würde hingegen aufsteigen. In jedem Fall wäre die Impfgasbewegung nicht mehr im gewünschten Maße repräsentativ für die Primärgasströmung. Mit diesem Ansatz wird auch das Problem der Verschmutzung innerhalb des Strömungsraumes, wie sie bei Verwendung eines Aerosols als Impfsubstanz auftritt, vermieden.

Allerdings sind Impfgas und Primärgas für herkömmliche Kameras nicht unterscheidbar und, weil typischerweise im optischen Spektralbereich transparent, sogar unsichtbar. Daher sieht die Erfindung weiter vor, die Detektion des Impfgases mittels eines dem Fachmann im Grunde bekannten Hintergrund-Schlierenmessverfahrens vorzunehmen. Dazu ist es allerdings notwendig, dass das Impfgas einen vom Primärgas (im Rahmen des BOS-Verfahrens) unterscheidbaren Brechungsindex aufweist. Eine andere Art der optischen Unterscheidbarkeit, beispielsweise Farbunterschiede oder Streuung wie beim Aerosol, ist im Rahmen der vorliegenden Erfindung nicht erforderlich und sogar nicht erwünscht. Der Fachmann wird verstehen, dass die genannten Eigenschaften des Impfgases relativ zum Primärgas, nämlich ähnliche Massendichte und unähnlicher Brechungsindex, bei gleichen Druck- und Temperaturbedingungen vorliegen müssen. Denn weder sind - aufgrund der typischerweise langsamen Strömungsgeschwindigkeiten - die natürlich auftretenden Druckunterschiede in der Strömung groß genug, um entsprechende Brechungsindex-Variationen zu provozieren. Noch ist im Rahmen der Erfindung vorgesehen, größere Temperaturunterschiede zwischen Primär- und Impfgas zu erzeugen, die sich ohnehin im Verlauf der Strömung verlieren würden.

Die nur lokale Beimpfung des Primärgases mit dem Impfgas sorgt dafür, dass auch die entsprechende Brechungsindex-Störung lokal begrenzt ist und sich insbesondere mit der Primärgasströmung durch den Strömungsraum bewegt. Und weil, wie oben erläutert, das BOS-Verfahren auf der Detektion zeitlicher Änderungen von Brechungsindex-Unterschieden beruht, kann die mittels BOS visualisierbare Störung als repräsentativ für die Primärgasströmung angenommen werden. Das erfindungsgemäße Verfahren ermöglicht daher eine indirekte Visualisierung der Primärgasströmung.

Von besonderer Bedeutung für die Erfindung ist, dass es sich bei dem Impfgas um eine Gasmischung, d.h. einer Komposition aus unterschiedlichen Reingasarten, handelt. Nur auf diese Weise ist es nämlich möglich, ein Impfgas mit den oben bereits erläuterten, erfindungswesentlichen Eigenschaften in Bezug auf Massendichte und Brechungsindex zu erzeugen. Dabei ist, wie die Erfinder festgestellt haben, nicht zu befürchten, dass sich die unterschiedlichen Gaskomponenten des Impfgases im Rahmen der Durchführung des erfindungsgemäßen Verfahrens aufspalten und insbesondere aufgrund der unterschiedlichen Massendichten ihrer Reinformen eine unerwünschte Relativbewegung zum Primärgas einnehmen würden. Vielmehr bleiben die Eigenschaften der zusammengesetzten Gasmischung erhalten.

Als ein besonders vorteilhaftes, beispielhaftes Impfgas für Luft als Primärgas, insbesondere bei langsamer Bewegung des Primärgases, hat sich eine Gasmischung aus 20% Sauerstoff, 25% Helium und 55% Argon erwiesen, wobei Abweichungen von jeweils +/- 1% als unkritisch anzusehen sind. Eine solche Gasmischung hat eine Molmasse von 29,3 g/mol und einen Brechungsindex $n'$ von 215 (angegeben als $(n-1) \times 10^6$; wo n der dimensionslose Brechungsindex ist). Der Molmassen-Unterschied zu Luft ist daher mit 1,5 g/mol ausreichend gering, sodass selbst bei niedrigen Strömungsgeschwindigkeiten über etliche Meter keine Relativbewegung zum Primärgas Luft zu befürchten ist. Andererseits ist der Brechungsindex-Unterschied von -73 so groß, sodass ein BOSbasiertes Detektionsverfahren zu sehr guten Ergebnissen im Hinblick auf eine Visualisierung der Strömung führt.

Die nachfolgende Tabelle gibt weitere, beispielhafte Gasmischungen an, die sich als erfindungsgemäßes Impfgas für erfindungsgemäße Verfahren mit Luft als Primärgas eignen, sowie deren Differenz in Molmasse und Brechungsindex zu Luft. Anhand dieser beispielhaften Vorgaben wir es dem Fachmann ein Leichtes sein, die für seinen jeweiligen Anwendungsfall (Primärgas, Strömungsgeschwindigkeit, durchströmte Strecke, Auflösungsvermögen des Bilddetektors, ...) optimale Gasmischung zusammenzustellen und dabei gegebenenfalls auch wirtschaftliche Aspekte, die sich aus den unterschiedlichen Preisen für verschiedene Reingase ergeben, zu berücksichtigen.

Tabelle 1

| Gas | Molmasse [g/mol] | Brechungsindex n' [(n-1)·10^6] | Impfgas 1 | Impfgas 2 | Impfgas 3 |
|---|---|---|---|---|---|
| He | 4,0 | 35 | 25% | 55% | 65% |
| Ar | 39,9 | 283 | 55% | - | - |
| Kr | 83,8 | 429 | - | 25% | - |
| Xe | 131,0 | 689 | - | - | 15% |
| $O_2$ | 32,0 | 252 | 20% | 20% | 20% |
| Luft | 28,8 | 288 | - | - | - |
| Molmasse [g/mol] | | | 29,3 | 29,6 | 28,7 |
| Brechungsindex n' [(n-1)·10^6] | | | 215 | 177 | 177 |
| Differenz Molmasse zu Luft [g/mol] | | | 0,5 | 0,8 | -0,1 |
| Differenz Brechnungsindex zu Luft [(n-1)·10^6] | | | -73 | -111 | -111 |

In jedem Fall sind Abweichungen von +/- 1% bei den Mengen der einzelnen Gaskomponenten weitgehend unkritisch.

Als allgemeine Formel für eine erfindungsgemäß als Impfgas tauglich angesehene Gasmischung, die die Eigenschaften hinreichender Relativbewegungsfreiheit und hinreichender Unterscheidbarkeit des Brechungsindexes aufweist, lässt sich schreiben:
$$\left| m_P - \sum_{i=1}^{N} a_i m_i \right| < 2 \text{ g/mol}$$
, vorzugsweise < 1g/mol, besonders bevorzugt $\leq$ 0,5 g/mol, und
$$\left| n'_P - \sum_{i=1}^{N} a_i n'_i \right| > 70$$
, vorzugsweise > 100, besonders bevorzugt $\geq$ 110,

wo $m_P$ die Molmasse und $n'_P$ der Brechungsindex des Primärgases, $m_i$ die Molmasse und $n'_i$ der Brechungsindex der i-ten Gaskomponente des Impfgases, $N$ die Anzahl von Gaskomponenten des Impfgases und $a_i$ ihr jeweiliger relativer Molanteil im Impfgas ist. Mit anderen Worten ist günstigerweise der Absolutbetrag der Differenz zwischen der Molmasse des Primärgases und des Impfgases kleiner als 2 g/mol, vorzugsweise kleiner als 1 g/mol, besonders bevorzugt kleiner oder gleich 0,5 g/mol und der Absolutbetrag der Differenz zwischen dem Brechungsindex des Primärgases und des Impfgases größer als 70, vorzugsweise größer als 100, besonders bevorzugt größer oder gleich 110. Die Molmasse und der Brechungsindex des Impfgases berechnen sich dabei als die mit ihren jeweiligen relativen Molanteilen gemittelten, entsprechenden Werte der Gaskomponenten des Impfgases. Die einzelnen Gaskomponenten sind bevorzugt Reingase und nicht selbst bereits Gasmische, wobei vorzugsweise 1 < N < 6, d. h. mindestens 2 und höchstens fünf, bevorzugt drei oder vier, besonders bevorzugt genau drei Reingase zur Herstellung des Gasgemischs verwendet werden.

Selbstverständlich sind auch andere, in der obigen Tabelle nicht aufgeführte Reingase als Komponenten eines erfindungsgemäßen Impfgases einsetzbar. Insbesondere in den typischen Anwendungsfällen, in denen der fragliche Strömungsraum während des Normalbetriebs nicht gasdicht von jeglichem menschlichen Personal getrennt ist, empfiehlt es sich jedoch, wenn das Gasgemisch ausschließlich Gasanteile enthält, die für Menschen nicht-toxisch und nicht-erstickend sind. Bei explosionsgefährlichen Anwendungen sollte hingegen auf die Verwendung oxidativer Gase verzichtet werden. Solche Einschränkungen der verwendbaren Gase werden insbesondere im Kontext von Arbeitsschutzvorschriften relevant sein.

Bevorzugt erfolgt die Beimpfung des Primärgases mit dem Impfgas mittels eines oder mehrerer Diffusoren. Im Gegensatz zur Einleitung über eine Düse wird das Impfgas bei der Einleitung über einen Diffusor nahezu ohne Eigenbewegung in die Primärgasströmung eingebracht, sodass keine Relativbewegung aufgrund einer initialen Eigengeschwindigkeit des Impfgases entstehen kann. Der oder die Diffusoren samt angeschlossener Impfgaszuleitung können innerhalb des fraglichen Strömungsraumes bewegbar, insbesondere verfahrbar angeordnet sein, sodass sich die Strömungsverteilung im gesamten Strömungsraum visualisieren lässt.

Günstigerweise ist vorgesehen, dass der für das Hintergrund-Schlierenmessverfahren erforderliche, gemusterte Hintergrund erzeugt wird durch kohärentes Ausleuchten einer im Sichtfeld des Bilddetektors hinter der Primärgasströmung angeordneten Projektionsfläche.

Dabei kann vorgesehen sein, dass wenigstens Bereiche der Projektionsfläche von einer Begrenzungswand des Strömungsraumes gebildet sind. Alternativ oder zusätzlich kann vorgesehen sein, dass wenigstens Bereiche der Projektionsfläche von einer Außenwand eines im Strömungsraum angeordneten Gegenstandes gebildet sind. Eine transparente Wand zwischen dem Bilddetektor und der Projektionsfläche, z. B. ein Frontfenster einer Flow-Box, ist dabei grundsätzlich nicht schädlich.

Ein besonderer Vorteil des Laserspeckle-BOS-Verfahren besteht nämlich darin, dass das Laserspeckle-Muster unabhängig von der Entfernungseinstellung der Abbildungsoptik stets scharf auf dem Bilddetektor abgebildet wird. Diese Eigenschaft ergibt sich aus der Physik der Interferenz, die der Entstehung des Laserspeckle-Musters zugrunde liegt. Andererseits ist es von herkömmlichen BOS-Varianten mit realen Hintergrundmustern bekannt, dass die Sensitivität des Verfahrens umso größer ist, je weiter der Abstand zwischen der zu visualisierenden Strömung und dem gemusterten Hintergrund auf den die Abbildungsoptik zu dessen scharfer Abbildung scharf gestellt sein muss, ist. Der Grund hierfür ist darin zu sehen, dass die der Visualisierung zugrundeliegende Störung der Lichtablenkung ein Winkelphänomen ist, das sich umso stärker ausprägt, je länger die durchlaufenen Wege sind. Ein großer Abstand zwischen Strömung und Hintergrund ist bei herkömmlichen BOS-Verfahren, wie sie beispielsweise in der Luft- und Raumfahrttechnik eingesetzt werden, unproblematisch. Bei Messungen in beengten Strömungsräumen hingegen sind die Dimensionen typischerweise deutlich kleiner und es interessieren vor allem Strömungen in unmittelbarer Nachbarschaft zu Wänden - seien es Begrenzungswände des Strömungsraumes selbst oder seien es Außenwände von im Strömungsraum angeordneten Gegenständen, wie z.B. Aufbauten oder Instrumente. Dies gilt beispielsweise in besonderem Maße bei dem bevorzugten Anwendungsfall der Strömungsvisualisierung in Flow-Boxen. Wird hier ein real gemusterter Hintergrund an der dem Bilddetektor gegenüber liegenden Rückwand der Flow-Box installiert und die Abbildungsoptik auf diesen Hintergrund scharf gestellt, führt dies zu einer deutlich beschränkten Sensitivität des Verfahrens. Bei der Anwendung des Laserspeckle-BOS-Verfahrens, wie im Rahmen der vorliegenden Erfindung bevorzugt vorgesehen, kann jedoch das Laserspeckle-Muster direkt auf die Flow-Box-Rückwand, Träger in der Flow-Box und/oder sogar auf die in der Flow-Box abzufüllenden Gefäße selbst projiziert werden. Die Abbildungsoptik des Bilddetektors kann hingegen auf einen Punkt hinter der (ggf. aus mehreren Ebenen zusammengesetzten) Projektionsfläche eingestellt und das Muster dadurch virtuell nach hinten verschoben werden. Entsprechend erhöht sich die Sensitivität der Messung.

Um bei einer solchen Ferneinstellung der Abbildungsoptik auch den Strömungsraumbereich, in dem sich die zu visualisierende Strömungsbewegung abspielt, scharf abbilden zu können, ist bevorzugt vorgesehen, dass die Abbildungsoptik derart abgeblendet wird, dass die Primärgasströmung im scharf abgebildeten Entfernungsbereich liegt. Mit anderen Worten wird mittels der Abbildungsoptik ein Tiefenschärfenbereich realisiert, der die im Strömungsbereich befindlichen Strukturen mit einschließt, obgleich die Abbildungsoptik zur Erhöhung der Sensitivität auf einen hinter der eigentlichen Projektionswand liegenden Punkt scharfgestellt ist.

Bevorzugt ist vorgesehen, dass das kohärente Ausleuchten der Projektionswand mittels eines koaxial zur optischen Achse des Bilddetektors ausgerichteten, die Strömung durchstrahlenden Lasers erfolgt. Dies hat sich im Hinblick auf die Abbildungspräzision als besonders günstig erwiesen. Dabei kann vorgesehen sein, dass Licht eines nicht-koaxial zur optischen Achse eines Bilddetektors ausgerichteten Lasers mittels eines Strahlteilers auf die optische Achse des Bilddetektors umgelenkt wird. Das vom Bilddetektor detektierte Licht durchläuft die Brechungsindex-Störung also doppelt: ein erstes Mal als Projektionslicht auf dem Weg zur Projektionswand und ein zweites Mal als Detektionslicht auf dem Weg von der Projektionswand zum Bilddetektor. Dies verstärkt die durch die Brechungsindex-Störung hervorgerufene Strahlablenkung. Allerdings entstehen bei nichtkoaxialer Ausrichtung von Projektions- und Detektionslicht sog. Geisterbilder auf dem Detektor, die für die Bildauswertung störend sind. Denkbar sind natürlich auch Ausgestaltungen, bei den die Projektionswand ohne vorherige Passage des Projektionslichtes durch die Strömung ausgeleuchtet oder so schräg bestrahlt wird, dass das entstehende Geisterbild nach außerhalb des sensitiven Detektorbereichs gelenkt wird.

Weitere Einzelheiten und Vorteile der Erfindung ergeben sich aus der nachfolgenden speziellen Beschreibung und den Zeichnungen.

Kurzbeschreibung der Zeichnungen

Es zeigen:

Figur 1: eine schematische Darstellung der Durchführung des erfindungsgemäßen Verfahrens zur Visualisierung von Luftströmungen in einer Flow-Box sowie

Figur 2: eine schematische Darstellung zur Illustration bevorzugter Bilddetektor-Einstellungen bei der Durchführung des erfindunasaemäßen Verfahrens.

Beschreibung bevorzugter Ausführungsformen

Gleiche Bezugszeichen in den Figuren deuten auf gleiche oder analoge Elemente hin.

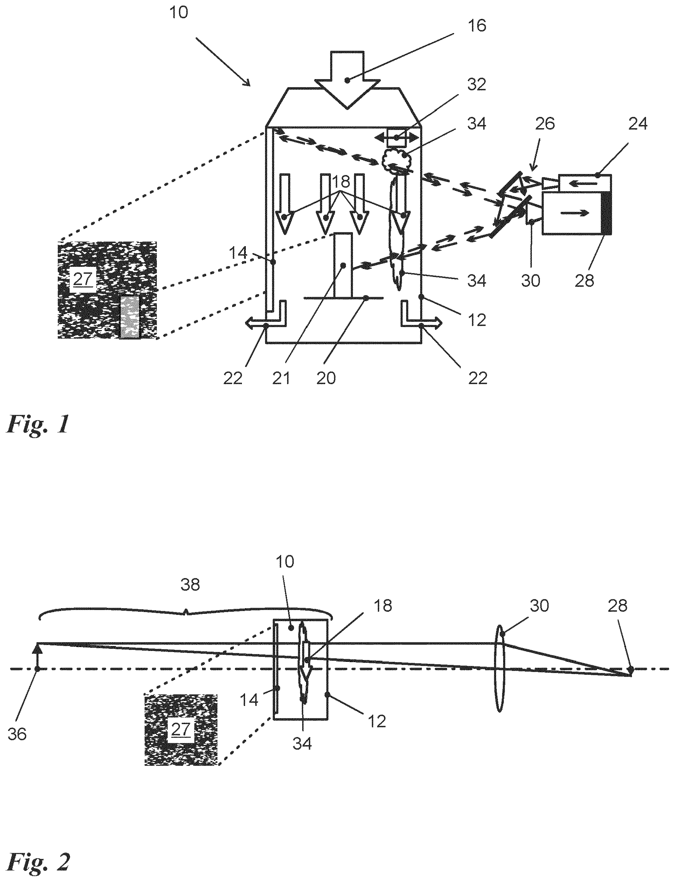

Figur 1 illustriert in stark schematisierter Form den Aufbau zur Durchführung eines erfindungsgemäßen Verfahrens am Beispiel einer sogenannten Flow-Box 10. Die Flow-Box 10 weist eine transparente Vorderwand 12 und eine mattierte Rückwand 14 auf. Die Mattierung der Rückwand 14 kann beispielsweise dadurch erfolgen, dass außen oder innen auf einer transparenten Rückwand 14 eine Mattscheibe, beispielsweise ein weißes Papier aufgebracht wird. Im Fall einer nicht-transparenten Rückwand 14 erübrigen sich derartige Maßnahmen. In ihrem oberen Bereich weist die Flow-Box 10 einen als Pfeil symbolisierten Luftanschluss 16 auf, über den steril gefilterte Luft in das Innere der Flow-Box 10 eingebracht werden kann. Bei der beschriebenen Ausführungsform dient diese steril gefilterte Luft als Primärgas. Selbstverständlich sind im Rahmen der Erfindung auch andere Primärgasarten einsetzbar.

Über nicht im Detail dargestellte Luftleitelemente wird das eingeleitete Primärgas in eine ebenfalls als Pfeile dargestellte Primärgasströmung 18 umgelenkt, die bei der dargestellten Ausführungsform im Wesentlichen laminar nach unten der Flow-Box 10 strömt. Auf einem Arbeitstisch 20 innerhalb der Flow-Box 10 kann eine beliebige Apparatur, insbesondere eine Abfüllanlage für pharmazeutische Flüssigkeiten, installiert sein. Andere Anlagenarten sind im Rahmen der Erfindung selbstverständlich auch denkbar. In Figur 1 sind derartige Einbauten oder eingebrachte Gegenstände schematisch als Hindernis 21 dargestellt. Im unteren Bereich der Flow-Box 10 sind seitliche Luftauslässe 22 angeordnet, die als ausschließliche Auslässe für die Primärgasströmung 18 vorgesehen sind.

Das erfindungsgemäße Verfahren kann eingesetzt werden, um zu überprüfen, ob die Primärgasströmung 18 tatsächlich dem gewünschten Strömungsweg folgt. Hierzu wird auf die Rückwand 14 und die Außenwand des Hindernisses 21 (soweit sie die Rückwand 14 verdeckt), die insoweit als zusammengesetzte Projektionsfläche wirken, ein Laserspeckle-Muster projiziert. Hierzu ist ein Laser 24 vorgesehen, dessen vorzugsweise im optischen Spektralbereich liegende Laserstrahlung mittels einer geeigneten Ablenkungs- und Aufweitungsoptik 26 auf die Projektionsfläche projiziert wird. Es entsteht ein Laserspeckle-Muster 27, welches links in Figur 1 beispielhaft angedeutet ist. Dieses Laserspeckle-Muster 27 wird mittels eines Bilddetektors 28 mit vorgeschalteter Abbildungsoptik 30 bildgebend detektiert. Bei der gezeigten Ausführungsform ist die Ablenkungs- und Aufweitungsoptik 26 des Lasers 24 so gestaltet, dass die optische Achse der Projektion des Laserspeckle-Musters 27 koaxial zur optischen Achse seiner Abbildung auf den Bilddetektors 28 liegt.

Über einen verfahrbaren Diffusor 32 innerhalb der Flow-Box 10 wird ein Impfgas 34, d.h. ein Gasgemisch mit den im Rahmen der allgemeinen Beschreibung ausführlich diskutierten Eigenschaften, der Primärgasströmung 18 beigemischt. Die Verfahrbarkeit des Diffusors 32 ermöglicht die einfache Variation des Beimpfungsortes zur Erstellung eines räumlichen Strömungsbildes. Das über den Diffusor 32 quasi ohne Eigengeschwindigkeit in die Primärgasströmung 18 eingebrachte Impfgas 34 folgt dieser relativbewegungsfrei, wobei es jedoch eine lokale Störung des Brechungsindexes der Strömung 18 erzeugt. Diese Brechungsindex-Störung wirkt sich in zweifacher Weise aus. Zum einen ändert sie die Projektion des Laserspeckle-Musters 27 auf die Projektionsfläche; zum anderen beeinflusst sie die Abbildung des Musters 27 auf den Bilddetektor 28. Da sich das Impfgas 34 und daher die von ihm hervorgerufene Brechungsindex-Störung mit der Primärgas-Strömung 18 bewegt, ist die Brechungsindex-Störung zeitlichen Änderungen unterworfen. Zeitlich aufeinanderfolgende Aufnahmen, insbesondere mit Zeitabständen von deutlich unter 1 Sekunde, bevorzugt unter 1/10 Sekunde, besonders bevorzugt unter 1/100 Sekunde und Vergleich der resultierenden Bilder, insbesondere durch Korrelations-Algorithmen, erlaubt sodann eine Berechnung und Darstellung des jeweils räumlich zugeordneten Wertes der hervorgerufenen Störung. Dadurch ist eine Visualisierung der solchermaßen gestörten Primärgasströmung 18 möglich. Deren korrekter Verlauf kann daher mittels des erfindungsgemäßen Verfahrens in Quasi-Echtzeit überprüft werden. Dabei bleibt der innere Aufbau der Flow-Box 10, insbesondere das Hindernis 10, zumindest schemenhaft erkennbar. Zur Verbesserung der Erkennbarkeit solcher Details können zwischendurch immer wieder "normale" Bilder mit nichtkohärenter Beleuchtung aufgenommen und den berechneten BOS-Bildern überlagert werden. Im üblichen Fall, dass die spektral schmalbandige Laser- Beleuchtung zusätzlich zu einer breitbandigen Umgebungsbeleuchtung erfolgt, können für die Aufnahme der BOS-Bilder einerseits und der "normalen" Bilder andererseits auch unterschiedliche Kameras mit entsprechenden Filtern eingesetzt werden.

Wie im Rahmen der allgemeinen Beschreibung bereits erläutert, ist bevorzugt vorgesehen, dass die Abbildungsoptik 30, wie in Figur 2 schematisch illustriert, auf einen Punkt 36 hinter der Projektionsfläche (von der in Figur 2 aus Gründen der Übersichtlichkeit nur die Rückwand 14 gezeigt ist), d.h. hinter dem Laserspeckle-Muster 27, scharfgestellt wird. Die Laserspeckle aller Bereiche der Projektionsfläche, einschließlich eventuell vorhandener Hindernis-Außenseiten, werden gleichwohl scharf auf dem Bilddetektor 28 abgebildet. Die für die Sensitivität des Verfahrens wesentliche Größe, nämlich der Abstand zwischen der Brechungsindex-Störung und dem gemusterten Hintergrund wird dadurch virtuell vergrößert. Dabei ist es günstig, wenn die Abbildungsoptik 30 so abgeblendet wird, dass der Tiefenschärfenbereich 38 trotz Scharfstellung auf den entfernten Punkt 36 die Strukturen innerhalb der Flow-Box 10 noch (ausreichend) scharf abbildet.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere eignet sich das erfindungsgemäße Verfahren auch zur Visualisierung von Strömungen in anderen Arten von Räumen, beispielsweise in zwangsbelüfteten Räumen. In jedem Fall hat die Anwendung der Laserspeckle-Variante den Vorteil, dass eine hochsensitive Visualisierung unter räumlich beengten Bedingungen möglich ist.

Bezugszeichenliste

| | |
|---|---|
| 10 | Flow-Box |
| 12 | Vorderwand von 10 |
| 14 | Rückwand von 10 |
| 16 | Luftanschluss |
| 18 | Primärgasströmung |
| 20 | Arbeitstisch |
| 21 | Hindernis |
| 22 | Luftauslass |
| 24 | Laser |
| 26 | Ablenkungs- und Aufweitungsoptik |
| 27 | Laserspeckle-Muster |
| 28 | Bilddetektor |
| 30 | Abbildungsoptik |
| 32 | Diffusor |
| 34 | Impfgas/Gasmischung |
| 36 | Scharfstellpunkt |
| 38 | Tiefenschärfebereich |

**Patentansprüche**

1. Verfahren zum Detektieren von Primärgasströmungen (18) in Strömungsräumen (10), wobei das in einem Strömungsraum (10) strömende Primärgas (18) lokal mit einem Impfgas beimpft und dessen Bewegung repräsentativ für die Strömung des Primärgases (18) mittels eines Bilddetektors (28) mit vorgeschalteter Abbildungsoptik (30) bildgebend detektiert wird,

   wobei als Impfgas ein sich mit dem Primärgas (18) mitbewegendes Gasgemisch (34) verwendet wird, welches einen von dem Primärgas (18) unterscheidbaren Brechungsindex aufweist, und die bildgebende Detektion mittels eines Hintergrund-Schlierenmessverfahrens erfolgt,
   **dadurch gekennzeichnet,**
   **dass** das Gasgemisch (34) derart zusammengesetzt ist, dass gilt:

$$\left| m_P - \sum_{i=1}^{N} a_i m_i \right| < 2 \text{ g/mol},$$

   und

$$\left| n'_P - \sum_{i=1}^{N} a_i n'_i \right| > 70,$$

   wo $m_P$ die Molmasse und $n'_P$ der Brechungsindex des Primärgases, $m_i$ die Molmasse und $n'_i$ der Brechungsindex der i-ten Gaskomponente des Impfgases, $N$ die Anzahl von Gaskomponenten des Impfgases und $a_i$ ihr jeweiliger relativer Molanteil im Impfgas ist,
   sodass die Mitbewegung des Gasgemischs (34) mit dem mit einer Strömungsgeschwindigkeit von 0,1 bis 1,0 m/s strömenden Primärgas (18) relativbewegungsfrei erfolgt.

2. Verfahren nach Anspruch 1,
   **dadurch gekennzeichnet,**

**dass** das Gasgemisch 20 +/-1% $O_2$ enthält.

3.  Verfahren nach einem der vorangehenden Ansprüche,
    **dadurch gekennzeichnet,**
    **dass** das Gasgemisch aus zwei bis fünf Reingasen als seinen Gaskomponenten hergestellt ist.

4.  Verfahren nach einem der vorangehenden Ansprüche,
    **dadurch gekennzeichnet,**

    **dass** das Gasgemisch 25% He, 55% Ar und 20% $O_2$
    oder 55% He, 25% Kr und 20% $O_2$
    oder 65% He, 15% Xe und 20% $O_2$
    enthält, jeweils mit einer Toleranz von +/- 1% der Mengen der einzelnen, sich zu 100% addierenden Gaskomponenten.

5.  Verfahren nach einem der vorangehenden Ansprüche,
    **dadurch gekennzeichnet,**
    **dass** der für das Hintergrund-Schlierenmessverfahren erforderliche, gemusterte Hintergrund erzeugt wird durch kohärentes Ausleuchten einer im Sichtfeld des Bilddetektors hinter der Primärgasströmung angeordneten Projektionsfläche.

6.  Verfahren nach Anspruch 5,
    **dadurch gekennzeichnet,**
    **dass** wenigstens Bereiche der Projektionsfläche von einer Begrenzungswand des Strömungsraumes gebildet sind.

7.  Verfahren nach einem der Ansprüche 5 bis 6,
    **dadurch gekennzeichnet,**
    **dass** wenigstens Bereiche der Projektionsfläche von einer Außenwand eines im Strömungsraum angeordneten Gegenstandes gebildet sind.

8.  Verfahren nach einem der Ansprüche 5 bis 7,
    **dadurch gekennzeichnet,**
    **dass** die Abbildungsoptik (30) auf einen hinter der Projektionsfläche (14) gelegenen Punkt (36) scharf gestellt ist.

9.  Verfahren nach einem der vorangehenden Ansprüche,
    **dadurch gekennzeichnet,**
    **dass** die Abbildungsoptik (30) derart abgeblendet ist, dass die Primärgasströmung (18) im scharf abgebildeten Entfernungsbereich liegt.

10. Verfahren nach einem der vorangehenden Ansprüche,
    **dadurch gekennzeichnet,**
    **dass** die Beimpfung des Primärgases (18) mit dem Gasgemisch (34) mittels eines oder mehrerer Diffusoren (32) erfolgt.

11. Verfahren nach Anspruch 10,
    **dadurch gekennzeichnet,**
    **dass** der oder die Diffusoren (32) samt Zuleitung für das Gasgemisch (34) verfahrbar innerhalb des Strömungsraumes (10) angeordnet sind.

12. Verfahren nach einem der vorangehenden Ansprüche,
    **dadurch gekennzeichnet,**
    **dass** das Gasgemisch (34) ausschließlich Gasanteile enthält, die für Menschen nicht-toxisch und nicht-erstickend sind.

**Claims**

1.  A method for detecting primary gas flows (18) in flow spaces (10), wherein the primary gas (18) flowing in a flow space (10) is locally inoculated with a seed gas and the movement of the latter, representative of the flow of the primary gas (18), is detected in an imaging manner by means of an image detector (28) with an imaging optics (30) arranged in front of it,

wherein a gas mixture (34) which moves with the primary gas (18) and has a refractive index which can be distinguished from the primary gas (18) is used as the seed gas, and the imaging detection is carried out by means of a background oriented schlieren measurement method,
**characterised**
**in that** the gas mixture (34) is composed in such a way that:

$$|m_P - \sum_{i=1}^{N} a_i m_i| < 2 \text{ g/mol},$$

and

$$|n'_P - \sum_{i=1}^{N} a_i n'_i| > 70,$$

where $m_P$ is the molar mass and $n'_P$ is the refractive index of the primary gas, $m_i$ is the molar mass and $n'_i$ is the refractive index of the i-th gas component of the seed gas, *N is* the number of gas components of the seed gas and $a_i$ is their respective relative molar fraction in the seed gas, so that the co-movement of the gas mixture (34) with the primary gas (18) flowing at a flow velocity of 0.1 to 1.0 m/s takes place without relative movement.

2. The method according to claim 1,
**characterised**
**in that** the gas mixture contains 20 +/-1% $O_2$.

3. The method according to one of the preceding claims,
**characterised**
**in that** the gas mixture is prepared from two to five pure gases as its gas components.

4. The method according to one of the preceding claims,
**characterised**

**in that** the gas mixture contains
25% He, 55% Ar and 20% $O_2$
or 55% He, 25% Kr and 20% $O_2$
or 65% He, 15% Xe and 20% $O_2$,
in each case with a tolerance of +/-1% of the amounts of the individual gas components adding up to 100%.

5. The method according to one of the preceding claims,
**characterised in,**
**that** the patterned background required for the background oriented schlieren measurement method is generated by coherent illumination of a projection surface arranged in the field of view of the image detector behind the primary gas flow.

6. The method according to claim 5,
**characterised**
**in that** at least portions of the projection surface are formed by a boundary wall of the flow space.

7. The method according to one of the claims 5 to 6,
**characterised**
**in that** at least regions of the projection surface are formed by an outer wall of an object arranged in the flow space.

8. The method according to any one of claims 5 to 7,
**characterised**
**in that** the imaging optics (30) is focused on a point (36) located behind the projection surface (14).

9. The method according to one of the preceding claims,
**characterised**
**in that** the imaging optics (30) are stopped down in such a way that the primary gas flow (18) lies in the distance range imaged sharply.

10. The method according to one of the preceding claims,
**characterised**
**in that** the inoculation of the primary gas (18) with the gas mixture (34) takes place by means of one or more diffusers (32).

11. The method according to claim 10,
**characterised**
**in that** the diffuser or the diffusers (32), together with the supply line for the gas mixture (34), are arranged so as to be movable within the flow chamber (10).

12. The method according to one of the preceding claims,
**characterised**
**in that** the gas mixture (34) exclusively contains gas components which are nontoxic and non-asphyxiating for humans.

**Revendications**

1. Un procédé de détection de flux de gaz primaire (18) dans des espaces d'écoulement (10), le gaz primaire (18) s'écoulant dans un espace d'écoulement (10) étant inoculé localement avec un gaz d'inoculation et le mouvement de celui-ci, représentatif de l'écoulement du gaz primaire (18), étant détecté par imagerie au moyen d'un détecteur d'image (28) avec une optique de représentation (30) montée en amont,

dans lequel on utilise comme gaz d'inoculation un mélange des gaz (34) se déplaçant avec le gaz primaire (18), qui présente un indice de réfraction pouvant être distingué du gaz primaire (18), et la détection par imagerie s'effectue au moyen d'une méthode des franges de font,
**caractérisé**
**en ce que** le mélange des gaz (34) est composé de telle sorte que l'on a

$$|m_P - \sum_{i=1}^{N} a_i m_i| < 2 \text{ g/mol},$$

et

$$|n'_P - \sum_{i=1}^{N} a_i n'_i| > 70,$$

où $m_P$ est la masse molaire et $n'_P$ l'indice de réfraction du gaz primaire, $m_i$ la masse molaire et $n'_i$ l'indice de réfraction du i-ème composant gazeux du gaz d'inoculation, $N$ le nombre de composants gazeux du gaz d'inoculation et $a_i$ leur part molaire relative respective dans le gaz d'inoculation,
de sorte que le mouvement conjoint du mélange des gaz (34) avec le gaz primaire (18) s'écoulant à une vitesse d'écoulement de 0,1 à 1,0 m/s s'effectue sans mouvement relatif.

2. Le procédé selon la revendication 1,
**caractérisé**
**en ce que** le mélange des gaz contient 20 +/-1% -de $O_2$.

3. Le procédé selon l'une des revendications précédentes,
**caractérisé**
**en ce que** le mélange des gaz est préparé à partir de deux à cinq gaz purs en tant que ses composants gazeux.

4. Le procédé selon l'une des revendications précédentes,
**caractérisé**

**en ce que** le mélange des gaz contient
25% de He, 55% de Ar et 20% de $O_2$
ou 55% de He, 25% de Kr et 20% de $O_2$
ou 65% de He, 15% de Xe et 20% de $O_2$,
dans chaque cas avec une tolérance de -+/- 1% des quantités des différents composants gazeux qui s'ajoutent à 100%.

5. Le procédé selon l'une des revendications précédentes,
**caractérisé,**
**en ce que** l'arrière-plan à motifs requis pour la méthode des franges de font est généré en éclairant de manière cohérente une surface de projection située dans le champ de vision du détecteur d'image en aval de l'écoulement du gaz primaire.

6. Le procédé selon la revendication 5,
**caractérisé**
**en ce qu'**au moins des zones de la surface de projection sont formées par une paroi de délimitation de l'espace d'écoulement.

7. Le procédé selon l'une des revendications 5 à 6,
**caractérisé**
**en ce qu'**au moins des zones de la surface de projection sont formées par une paroi extérieure d'un objet disposé dans l'espace d'écoulement.

8. Le procédé selon l'une des revendications 5 à 7,
**caractérisé**
**en ce que** l'optique d'imagerie (30) est focalisée sur un point (36) situé derrière la surface de projection (14).

9. Le procédé selon l'une des revendications précédentes,
**caractérisé**
**en ce que** l'optique d'imagerie (30) est pourvue d'un diaphragme de telle sorte que l'écoulement du gaz primaire (18) se trouve dans la plage de distance représentée de manière nette.

10. Le procédé selon l'une des revendications précédentes,
**caractérisé**
**en ce que** l'inoculation du gaz primaire (18) par le mélange des gaz (34) est réalisée au moyen d'un ou plusieurs diffuseurs (32).

11. Le procédé selon la revendication 10,
**caractérisé**
**en ce que** le ou les diffuseurs (32), y compris la conduite d'alimentation pour le mélange des gaz (34), sont disposés de manière mobile à l'intérieur de l'espace d'écoulement (10).

12. Procédé selon l'une des revendications précédentes,
**caractérisé**
**en ce que** le mélange des gaz (34) contient exclusivement des fractions de gaz qui sont non toxiques et non asphyxiantes pour l'homme.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010030143 A1

- DE 19942856 B4

**In der Beschreibung aufgeführte Nicht-Patentliteratur**

- Concentration measurement in a round hydrogen jet using Background Oriented Schlieren (BOS) technique. **KOTCHOURKO, N. et al.** International Journal of Hydrogen Energy. Elsvier Science Publishers, 02. Dezember 2013, vol. 39
- Drag force on quasi-axisymmetric scramjets at various flight Mach numbers: theory and experiment. **TANIMIZU, K. et al.** Shock Waves. Springer, 13. Marz 2009, vol. 19

- **MEIER, A. H. ; ROESGEN, TH.** Improved background oriented schlieren imaging using laser speckle illumination. *Exp. fluids,* 2013, vol. 54, 1549
- **MICHALSKI, Q. et al.** An application on speckle-based background oriented schlieren for optical calorimetry. *Experimental Thermal and Fluid Science,* 09. September 2017, vol. 91, ISSN 0894-1777